# EUROPEAN PATENT SPECIFICATION

(11) **EP 0 912 308 B1**
(45) Date of publication and mention of the grant of the patent: **19.03.2003**
(21) Application number: 97926147.6
(22) Date of filing: 18.06.1997
(51) Int. Cl.: B28D 1/22, B23K 26/00, E04F 21/16

(54) **GROUT OR MORTAR REMOVAL BY LASER**
ENTFERNEN VON SCHLAMM ODER MÖRTEL MITTELS LASER
SUPPRESSION AU LASER DE MORTIER OU DE COULIS DE CIMENT

(30) Priority: 19.06.1996 GB 9612776; 11.07.1996 GB 9614600
(43) Date of publication of application: 06.05.1999
(73) Proprietor: British Nuclear Fuels PLC, Warrington, Cheshire WA3 6AS (GB)
(72) Inventor: SPENCER, Julian Timothy British Nuclear Fuels plc., Preston PR4 0XJ (GB); LI, Lin Manufacturing Division, Manchester M60 1QD (GB); LAWRENCE, Jonathan Manufacturing Division, Manchester M60 1QD (GB)
(74) Representative: Goddard, David John
(86) International application number: GB9701638
(87) International publication number: WO97048536

(56) References cited:
- EP-A- 0 552 751
- EP-A- 0 642 846
- WO-A-94/19140
- WO-A-95/27986
- WO-A-95/35575
- GB-A- 2 261 901

## Description

The present invention relates to the removal of grout or mortar particularly, though not exclusively from between tiles and bricks.

Tiles such as ceramic tiles are applied to the walls, floors and sometimes ceilings in hospitals, kitchens, bathrooms, biological and nuclear research laboratories and lavatories for example. Refractory tiles are used as linings in furnaces, kilns and incinerators. Such tiled surfaces frequently have grout interposed between the tile edges so as to seal therebetween. One of the problems of a tiled surface is that contamination can enter into and exit through the porous grout between adjoining tiles. The problem is exacerbated, as a result of the tile grout porosity, by water or chemical solutions, germs and other harmful agents often permeating into cavities behind the tiles and corroding the bonding agent used to fix the tiles to the substrate, the substrate itself or even the tile since the backs of glazed tiles are frequently unglazed. Furthermore, the predominant problem with tile grout is that over a period of time it becomes contaminated, discoloured or may even disintegrate. Periodically, the grout has to be removed physically which is an arduous, frequently ineffective and invariably costly undertaking.

Currently, the method used for the removal of grout comprises mechanical cutting using a saw blade or by mechanical chiselling. In either case, the removal of grout cannot be made thoroughly. Furthermore, mechanical removal can often damage the tiles which make the process very expensive due to the need for tile replacement. Sometimes, damage to tiles can be relatively slight and may consist only of chipping of the glazing. However, in this case the tile itself is frequently rendered porous resulting in the uptake of harmful substances. The work zone and the tools used to remove grout are frequently contaminated. This is particularly undesirable when radioactive and/or biological contamination is present.

Similarly, during building work such as servicing, renovation, alterations and extensions in buildings and civil installations, mortar between building blocks such as bricks, stone blocks, concrete tiles, stone tiles and metallic cladding tiles may need to be removed and replaced either completely or partially. The removal of mortar is currently carried out by using mechanical saw blades, pneumatic chisels or manual chisels. During these operations, a great deal of noise is produced in addit8ion to dust generation. The pollution to the environment caused by noise can be amplified and transmitted to many parts of a building remote from the site where work is being carried out thus causing discomfort to the people and affecting work normally carried out within the building. Furthermore, as in the case of grout between tiles, mechanical means of removing mortar may sometimes cause damage to the edges of the building blocks which is especially deleterious in the case where the material is marble or granite and used for aesthetic purposes, and causes great fatigue and discomfort to the operatives carrying out the work.

EP-A-0653762 describes the use of lasers for removal of large areas of contaminated materials such as concrete but does not deal with problem of material removal in narrow gaps defined by objects which may themselves be easily damaged.

According to the present invention there is provided a method for the removal of grout from gaps between adjacent objects, including glazed tiles, bricks and building blocks, the method comprising the steps of: directing the beam of a laser device onto said grout; causing mutual relative movement between said laser beam and said grout; providing removal means for debris resulting from said grout removal and, keeping the laser beam spot size to a dimension less than that of the width of the grout between the closely adjacent objects.

In the present specification, the term 'grout' should also be taken to include mortar or any other similar material used for example, to separate, join, delineate, fill-in between joints, joins or interfaces between objects.

The objects may be ceramic and/or refractory tiles, building blocks such as bricks, stone blocks, cladding, marble tiles or slabs for example.

The laser device may be a portable unit capable of being moved to and from sites where grout removal is required.

Preferably the laser beam may have a wavelength in the range from 0.4µm to 10.6µm. More preferably, the wavelength may be in the range from 0.4µm to 1.2µm. the laser beam spot size may be commensurate with the width of the grout filling or may be less than the width of grout filling.

The use of a non-contracting method of grout removal by laser results in grout removal which is both more efficient, does not cause damage to the tiles and minimises consequential contamination of the work zone.

Preferably, the laser beam is transmitted to the grout via optical fibre since such fibres are easily handled and manipulated. Nd-YAG and semi-conductor lasers are examples of such lasers which may be employed with optical fibres. The use of a laser wavelength in the range from 0.4µm to 1.2µm has the dual advantage that a laser beam in this range of wavelengths may be transmitted via optical fibres and also that the laser beam energy is relatively efficiently absorbed by the optically darker grout whereas it is reflected by the optically lighter glazed tiles so that the tiles are not damaged by the method.

Where optical fibres are used to transmit the laser beam to the grout, the laser beam may be collimated and focused or defocused after exiting the optical fibre to enable control of the spot size on the grout work surface.

A further type of laser which may be particularly suitable for carrying out the method of the present invention is a diode pumped fibre laser.

Focusing may be effected by a lens or curved mirror and the beam spot size may desirably be about ¾ of the width of the grout.

A pulsed laser beam having an energy of 1 to 10J/pulse, a pulse width of 1 to 20ms and a beam spot size of 1 to 8mm for example may be used. The precise parameters will be governed inter alia by the grout width, volume and depth per unit length to be removed and, desired rate of removal and the grout material.

Alternatively, a continuous wave laser may be used, in which case, the average power should be more than 50W.

The physical and material characteristics of the grout to be removed will determine the power required but in ,general a power density in the range from 50W/cm² to 10MW/cm² may be employed depending upon the mode of operation.

Where laser beams having longer wavelengths are employed, delivery may be by a mirror system rather than optical fibre.

When a working laser having an infrared beam is used, e.g. Nd-YAG and GaAlAs diode lasers for example, a low power visible aiming laser beam such as from a HeNe laser or a visible semi-conductor laser having a low power of about 0.5mW to 3mW for example may be used coaxially with the working laser which has a much higher power, so as to aid the positioning of the spot of the working laser beam. Such an arrangement is common in commercial high power lasers.

The laser beam may be aimed and operated manually or automatically. When automatic or semi-automatic processing is used, mechanical following, sensor/camera sensing of the location and path of the grout to guide the system positioning, and/or a robotics system may be incorporated into the handling system.

Due to the reflective nature of glazed tiles or marble for example and the fact that such grout removal processing will often be carried out in a closed environment, it is important that control of the laser beam is exercised at all times, especially where people are present within the environment. In order to prevent accidental escape of the laser beam due to reflection, a safety enclosure device which surrounds the limited area in which the laser beam is operating may be employed. The safety enclosure may comprise a box-like unit for example having an open face facing towards the surface where grout is to be removed, the face opposite to the open face is closed so as to prevent reflection by absorption, this face surrounding the laser processing optics. The enclosure may be made of optically transparent or partially transparent material which is opaque to the working laser beam wavelength and/or may be provided with an optically transparent window. The open end of the enclosure may be provided with switch means which only allow the laser beam to be used when the enclosure is adjacent the surface to be treated. Such switch means may comprise contact roller switches allowing the enclosure to be traversed across the surface to be treated with the laser. The material of the enclosure may allow a low power positioning laser as described hereinabove to be observed by an operator but will prevent transmission of the working laser beam wavelength. The enclosure may be provided with means to extract fume and debris resulting from grout removal therefrom. Such means may comprise suction extraction means and may include a suitable conduit within the enclosure having an extraction orifice adjacent the laser impingement working area to directly suck up resulting debris. The lower face of the enclosure may be provided with a sealing skirt in rubbing contact with the workpiece surface to prevent excessive egress of debris.

The laser may be provided with a nozzle coaxial to the laser beam so as to pass gas therethrough in order to prevent fouling of the laser optics by back-scattered debris and fumes. Such gases may include compressed air, nitrogen, argon and helium for example. The nozzle may additionally be utilised to provide a relatively high velocity and/or high pressure gas jet which impinges on the grout working spot to assist in debris removal. Alternatively, a separate gas jet nozzle may be provided in the enclosure and having an impingement point coincident with the laser working spot.

In our co-pending European patent application with publication number 0 653 762, we describe a method of treating a concrete surface for example whereby the surface is treated with a high power laser under certain conditions to cause the surface layer of a hydraulically bonded material such as concrete to either spall off in small pieces or to become detached over a relatively large area due to the formation of a heat affected zone and resulting breaking of so-called hydraulic bonds and the dehydration caused. The dehydration is not merely the driving off of free water which might be in physical contact with the grout but the liberation of bound water of hydration in the material's chemical structure. In the present invention, most grouts tend to be either polymeric or hydraulically bonded materials. The grout on absorbing the laser beam energy raises its temperature. At relatively low temperatures organic compounds will start to decompose and water will vaporise very quickly causing internal pressure waves within the grout; the combination of these two effects together with high thermal stress gradients due to low thermal conductivity result in a rapid increase in internal stress and pressure within the grout causing removal thereof. Laser heating is also nonuniform and causes local explosions or cracks resulting in the removal of the grout. Further additional stresses which assist grout removal may be caused by thermal decomposition of inorganic components of the grout.

The rate of grout removal may be enhanced by wetting of the grout, prior to laser treatment, so that it absorbs water to increase the degree of steam formation and internal stress in the grout.

When a continuous wave laser is used, the mechanism of grout removal is similar to that with a pulsed laser, however, more of the ejected material may be melted, with some combustion of organic components.

A particular advantage of the method of the present invention is that due to the relatively high temperatures reached during the process, sterilisation of the materials adjacent the grout area is achieved which may be important in the particular case where a wall facing comprises tiles in for example a hospital or laboratory. Where the grout is a mortar between building blocks the dust can be collected conveniently since the interaction spot may be only around 2-8mm instead of 100-300mm for circular mechanical cutting blades or chisels for example. A further particular advantage is the reduction of noise and dust so as to produce significant environmental benefits. Furthermore, the process is a non-contact process and no force is required to be applied by the operator. Thus, human fatigue is greatly reduced compared to mechanical mortar removal methods. The non-contact nature of the process also simplifies the requirements of manipulators or robot arms which are employed in automated systems. Damage to building blocks and the substrate may also be minimised or avoided due to higher controllability of the process and much lower mechanical stresses imposed.

In our copending International patent application number WO95/22149, a method of forming a coating on a wall, for example, is described. The method comprises filling gaps between tiles with a vitrifiable grout material, heating the grout with a laser beam for example, to cause vitrification and welding of the tiles together. The present invention may be used to remove old grout which is replaced and treated as in WO95/22149.

In order that the present invention may be more fully understood, examples will now be described by way of illustration only with reference to the accompanying drawings, of which:
Figure 1 shows a general schematic perspective view of a tiled area having grout between the tiles;
Figure 2 shows a schematic cross section through a laser head and enclosure employed in the method of the present invention; and
Figure 3 which shows a schematic view of similar apparatus to that shown in Figure 2 for use in the method of the present invention.

Referring now to the drawings and where the same features are denoted by common reference numerals.

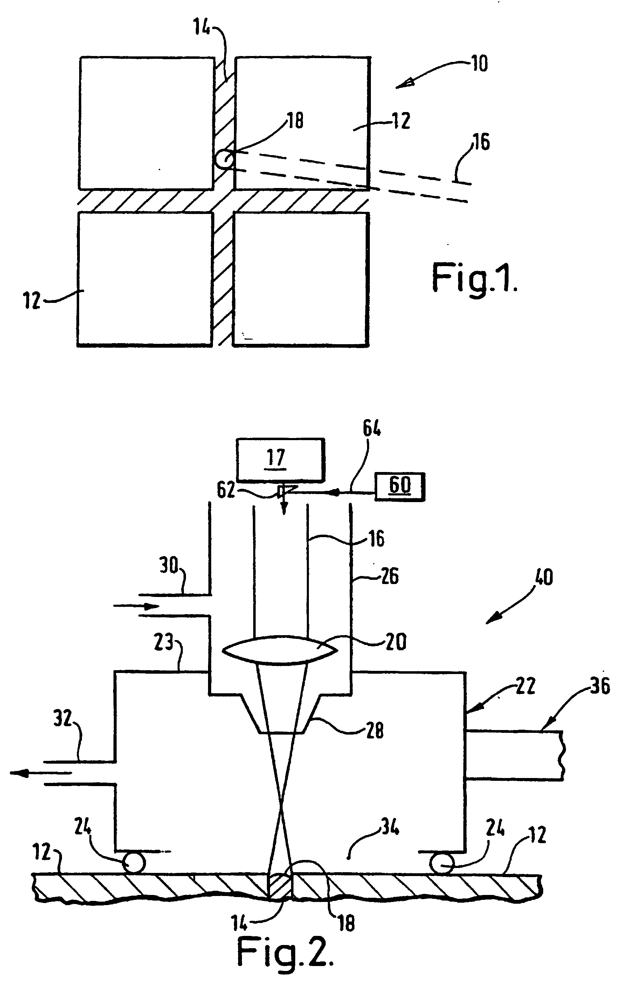

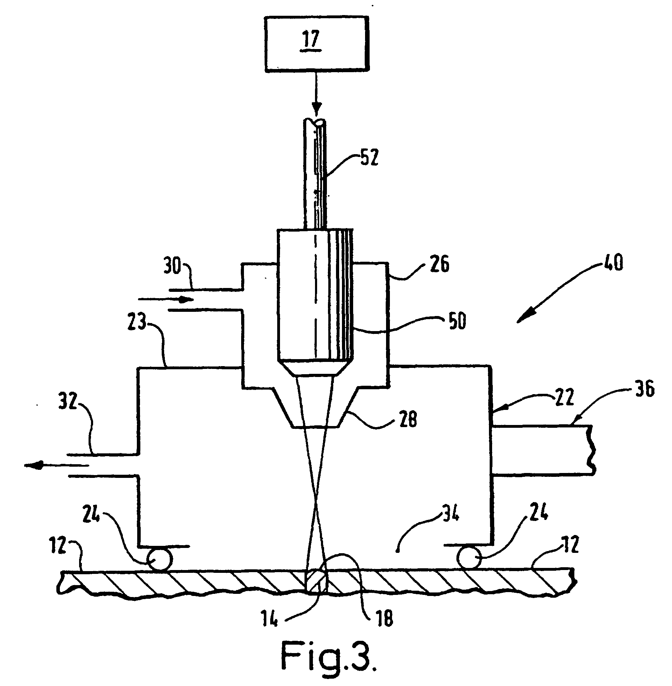

A small section 10 of four tiles 12 from a much larger area (not shown) is shown in Figure 1. Each tile 12 is separated by a gap filled with grout 14. A laser beam 16 is adjusted such that its spot 18 lies substantially wholly upon the grout 14. Figure 2 shows a schematic cross-section through an arrangement for carrying out the method of the present invention. The arrangement comprises the laser beam 16 from a laser device indicated at 17 impinging upon a focusing lens 20 (or a plurality of lenses) to form the desired laser beam spot 18 on the grout 14. The area of grout being treated is shrouded by an enclosure 22 having at least a face or window 23 made of optically transparent material but which is opaque to the particular laser wavelength in use. The enclosure 22 is provided with contact roller limit switches 24 allowing easy movement across the surface and such that the laser cannot be operated unless the switches 24 are in contact with the surface of the tiles 12. The enclosure 22 is sealingly but movably engaged with a shroud tube 26 having a nozzle 28 and a gas inlet 30. Gas which is non-reactive is pumped into the gas inlet 30 so as to exit from the nozzle 28 so as to prevent the focusing lens 20 from being contaminated by back scattered debris and fumes. The nozzle 28 also directs the gas flow onto the working area coincident with the laser beam spot 18 in order to assist removal of debris from the grout 14. Alternatively, a separate gas jet nozzle may be provided to cause a gas jet to impinge on the laser spot working area 18 to assist debris removal. However, the gas flow 30 to prevent contamination of the lens 20 will generally be maintained. The enclosure 22 is also provided with a gas extraction port 32 which is operably connected to a vacuum extraction system to remove fume and debris from a suction orifice adjacent the working area. More than one suction tube, port and orifice may be provided. An open face 34 of the enclosure 22 is distanced from the tiled surface by the contact roller limit switches 24 such that a net flow of air is drawn in through the open face of the enclosure and extracted via the port 32 and/or by another port, thereby, preventing egress of fume and contaminant to the environment. The enclosure 22 may be provided with a flexible rubbing sealing skirt to further minimise egress of debris. Although Figure 2 shows a laser beam 16 impinging upon the focusing lens 20, this may be replaced with an optical fibre as indicated with reference to Figure 3 below. The complete assembly 40 may be attached to a manipulator such as a robotic arm indicated schematically by an attachment 36 to the enclosure 22 so as to move the assembly 40 in a predetermined manner so as to follow the lines of grout 14. The robotic arm 36 may be provided with suitable sensing means so as to follow the lines of grout where these may be irregular or curved for example. Alternatively, the arrangement 40 may be moved manually by a suitably protected operator (not shown). The laser generator 17 itself may be mounted on a trolley (not shown).

Figure 3 shows a similar arrangement to Figure 2 but with a lens 20 holding arrangement 50 sealed into the shroud tube 26 and the lens 20, within the lens holding arrangement 50 and having a fibre optic 52 laser beam supply from the remotely sited laser device 17. Manipulation of the assembly 40 is thus facilitated due to reduce mass and size.

In operation, the arrangements shown in Figures 2 and 3 may be used according to the following method. The laser device 17 is powered up and is aimed onto the grout 14 via a visible aiming laser such as a HeNe laser 60 which provides a coaxial beam 64 through a splitter 62, and the distance between the laser processing head comprising the focusing lens 20 and gas nozzle being adjusted so that a suitable beam spot size is obtained. The gas supply to the port 30 and the extraction system to the port 32 is switched on and, if operated manually, the operator may don suitable protective clothing, eye protection and breathing equipment as appropriate. The working laser may be operated by opening a laser shutter (not shown) through a hand held switch (when operated manually), the switch not being operable when the contact roller limit switches 24 are not in contact with the tile 12 surface. Depending upon the rate of grout removal at any one position, the beam/grout interaction point may be moved at an appropriate speed.

Since the laser beam has a well defined energy distribution and, the melting point of the tiles or building blocks are much higher than the temperature required to achieve disintegration of the grout, the use of a laser beam causes minimum damage to the tiles or building blocks contrary to prior art mechanical grout removal methods.

In the particular case of mortar which is generally employed between structural building blocks and which is generally a hydraulically bonded material; in Figure 1, the objects 12 may be considered to be structural building blocks such as bricks. At low power densities of less than about 150 W/cm², the mortar material is heated but not melted as thermal stress is generated within the mortar principally by dehydration of the bound water of hydration in the mortar structure causing cracks and disintegration. The loosened material can then be extracted by use of suction and/or compressed air for example, the compressed air being used to aid removal of any partially detached particles. At medium power densities of about 150-800 W/cm², the moisture within the mortar during thermal dehydration of the bound water of hydration expands in an explosive manner causing detachment of mortar pieces rather than in dust form from the surface. Very little heat damage such as melting is generated in this mode. At higher power densities up to about 10000 W/cm² the mortar will melt and vaporise and a heat effected zone is often generated below the melted surface. At very high power densities greater than 10000 W/cm² and which is often operated in the pulsed laser mode, the beam to material interaction time is very short and thus the thermal penetration depth which is (proportional to the square root of the interaction time) is small. A small part of the surface is vaporised and a shock wave is produced which causes fracture of the underlying material thus enabling the removal of the mortar simply by fracture and subsequent extraction. Very little heat effected zone is produced in this mode.

## Claims

1. A method for the removal of grout (14) from gaps between a plurality of closely adjacent objects (12), including glazed tiles, bricks and building blocks, the method comprising the steps of: directing the beam (16) of a laser device (17) onto said grout (14) at a power level to cause removal of the grout; causing mutual relative movement between said laser beam and said grout; providing removal means (28; 42) for debris resulting from said grout removal and, keeping the laser beam spot size to a dimension less than that of the width of the grout between the closely adjacent objects.

2. A method according to claim 1 wherein the laser device is a portable unit capable of being moved to and from sites where grout removal is required.

3. A method according to either claim 1 or claim 2 wherein the laser beam is transmitted to the grout via optical fibre (52).

4. A method according to any one preceding claim wherein the laser is selected from the group comprising: Nd-YAG laser; semi-conductor laser; and, diode pumped fibre laser.

5. A method according to any one preceding claim wherein the laser also includes a low-power visible aiming laser (60).

6. A method according to any one preceding claim wherein an area of grout being treated is surrounded by an enclosure (22) to prevent escape of laser light..

7. A method according to claim 6 wherein the enclosure is transparent (23) to optical light and opaque to laser light of the wavelength in use.

8. A method according to any one preceding claim wherein the laser beam has a wavelength of 0.4 to 10.6µm.

9. A method according to claim 8 wherein the laser beam has a wavelength of from 0.4 to 1.2µm.

10. A method according to any one preceding claim wherein the laser is a pulsed laser having a pulse width of 1 to 20 ms.

11. A method according to claim 10 wherein the laser beam has an energy of 1 to 10 J/pulse.

12. A method according to any one preceding claim from 1 to 9 wherein the laser is a continuous wave device.

13. A method according to claim 12 wherein the average power is more than 50W.

14. A method according to any one preceding claim wherein said debris removal means comprises suction removal (44, 46)at a position adjacent the grout laser treatment area.

15. A method according to any one preceding claim further including the step of assisting debris removal with a gas jet.

16. A method according to any one preceding claim from 6 to 15 further including the step of providing an optically translucent area in said enclosure.

17. A method according to any one preceding claim wherein the grout has additional water applied.

## Patentansprüche

1. Verfahren zum Entfernen von Mörtel (14) aus Zwischenräumen zwischen mehreren dicht nebeneinander angeordneten Objekten (12), einschließlich glasierter Ziegel, Ziegel oder Bausteine, wobei das Verfahren die folgenden Schritte umfaßt: Richten des Strahls (16) einer Laservorrichtung (17) auf den Mörtel (14) bei einem Leistungspegel, der ein Entfernen des Mörtels bewirkt; Erzeugen einer gegenseitigen Relativbewegung zwischen dem Laserstrahl und dem Mörtel; Bereitstellen von Entfemungsmitteln (28; 42) für Schutt, der von der Mörtelentfemung herrührt, und Einhalten einer Abmessung für die Größe des Laserstrahl-Lichtpunktes, die geringer als die Breite des Mörtels zwischen den dicht nebeneinander angeordneten Objekten ist.

2. Verfahren nach Anspruch 1, bei dem die Laservorrichtung eine tragbare Einheit ist, die zum Transport zu und zum Rücktransport von Orten geeignet ist, an denen ein Entfemen von Mörtel erforderlich ist.

3. Verfahren nach Anspruch 1 oder Anspruch 2, bei dem der Laserstrahl über eine optische Faser (52) zum Mörtel transmittiert wird.

4. Verfahren nach einem vorhergehenden Anspruch, bei dem der Laser aus der folgenden Gruppe ausgewählt ist: Nd-YAG-Laser, Halbleiterlaser und Dioden-gepumpte Faserlaser.

5. Verfahren nach einem vorhergehenden Anspruch, bei dem der Laser auch einen sichtbaren Ziellaser (60) mit niedriger Leistung umfaßt.

6. Verfahren nach einem vorhergehenden Anspruch, bei dem ein zu behandelnder Mörtelbereich von einem Gehäuse (22) umgeben ist, um ein Entweichen von Laserlicht zu verhindern.

7. Verfahren nach Anspruch 6, bei dem das Gehäuse für optisches Licht transparent (23) und für Laserlicht der verwendeten Wellenlänge opak ist.

8. Verfahren nach einem vorhergehenden Anspruch, bei dem der Laserstrahl eine Wellenlänge von 0,4 bis 10,6 µm hat.

9. Verfahren nach Anspruch 8, bei dem der Laserstrahl eine Wellenlänge von 0,4 bis 1,2 µm hat.

10. Verfahren nach einem vorhergehenden Anspruch, bei dem der Laser ein gepulster Laser mit einer impulsbreite von 1 bis 20 ms ist.

11. Verfahren nach Anspruch 10, bei dem der Laserstrahl eine Energie von 1 bis 10 J/Impuls hat.

12. Verfahren nach einem vorhergehenden Anspruch 1 bis 9, bei dem der Laser eine Dauerstrichvorrichtung ist.

13. Verfahren nach Anspruch 12, bei dem die mittlere Leistung mehr als 50 W beträgt.

14. Verfahren nach einem vorhergehenden Anspruch, bei dem die Schuttentfernungseinrichtung ein Entfernen durch Absaugen (44, 46) an einer Position benachbart dem Mörtel-Laserbehandlungsbereich umfaßt.

15. Verfahren nach einem vorhergehenden Anspruch, das zudem den Schritt der Unterstützung der Schuttentfemung mit einem Gasstrahl umfaßt.

16. Verfahren nach einem der vorhergehenden Ansprüche 6 bis 15, das zudem den Schritt der Bereitstellung eines optisch durchscheinenden Bereiches in dem Gehäuse umfaßt.

17. Verfahren nach einem vorhergehenden Anspruch, bei dem der Mörtel zusätzlich mit Wasser beaufschlagt wird.

## Revendications

1. Méthode pour l'enlèvement de coulis de ciment (14) d'espaces entre une pluralité d'objets étroitement adjacents (12), incluant des carreaux de faïence, des briques et des blocs de construction, la méthode comprenant les étapes de : diriger le faisceau (16) d'un dispositif laser (17) sur ledit coulis de ciment (14) à un niveau de puissance entraînant l'enlèvement dudit coulis de ciment ; causer un mouvement relatif mutuel entre ledit faisceau laser et ledit coulis de ciment ; prévoir des moyens d'enlèvement (28, 42) pour les débris résultant dudit enlèvement du coulis de ciment et, garder la taille du point du faisceau laser à une dimension inférieure à celle de la largeur du coulis de ciment entre les objets étroitement adjacents.

2. Méthode selon la revendication 1, **caractérisée en ce que** le dispositif laser est une unité portable apte à être déplacée de et à partir de site où l'enlèvement de coulis de ciment est exigé.

3. Méthode selon l'une des revendications 1 ou 2, **caractérisée en ce que** le faisceau laser est transmis au coulis de ciment à travers une fibre optique (52).

4. Méthode selon l'une des revendications précédentes, **caractérisée en ce que** le laser est choisi parmi le groupe comprenant : le laser Nd-YAG ; les lasers à semi conduction ; et, les lasers de fibres pompés par diodes.

5. Méthode selon l'une des revendications précédentes, **caractérisée en ce que** le laser comporte également un laser à pointage visible de faible puissance (60).

6. Méthode selon l'une des revendications précédentes, **caractérisée en ce qu'**une zone de coulis de ciment devant être traitée est entourée par une enceinte (22) pour prévenir la fuite de lumière laser.

7. Méthode selon la revendication 6, **caractérisée en ce que** l'enceinte est transparente (23) à la lumière optique et opaque à la lumière laser de la longueur d'onde en fonctionnement.

8. Méthode selon l'une des revendications précédentes, **caractérisée en ce que** le faisceau laser a une longueur d'onde de 0,4 à 10,6 µm.

9. Méthode selon la revendication 8, **caractérisée en ce que** le faisceau laser a une longueur d'onde d'environ 0,4 à 1,2 µm.

10. Méthode selon l'une des revendications précédentes, **caractérisée en ce que** le laser est un laser à impulsions ayant une largeur d'impulsion de 1 à 20 ms.

11. Méthode selon la revendication 10, **caractérisée en ce que** le faisceau laser a une énergie de 1 à 10 J/impulsion.

12. Méthode selon l'une des revendications précédentes 1 à 9, **caractérisée en ce que** le laser est un dispositif à ondes continues.

13. Méthode selon la revendication 12, **caractérisée en ce que** la puissance moyenne est supérieure à 50W.

14. Méthode selon l'une des revendications précédentes, **caractérisée en ce que** les moyens d'enlèvement du débris comportent des enlèvements par aspiration (44, 46) à une position adjacente de la zone de traitement laser du coulis de ciment.

15. Méthode selon l'une des revendications précédentes, incluant, de plus, l'étape d'aide à l'enlèvement du débris avec un courant de gaz.

16. Méthode selon l'une des revendications précédentes 6 à 15, incluant, de plus, l'étape de fourniture d'une zone optiquement translucide dans ladite enceinte.

17. Méthode selon l'une des revendications précédentes, **caractérisée en ce que** le coulis de ciment a de l'eau supplémentaire qui lui est appliquée.
